# EUROPÄISCHE PATENTSCHRIFT

(11) **EP 4 260 051 B1**
(45) Veröffentlichungstag und Bekanntmachung des Hinweises auf die Patenterteilung: **01.10.2025**
(21) Anmeldenummer: 21836503.9
(22) Anmeldetag: 13.12.2021
(51) Int. Cl.: G01N 21/88, G01N 21/896

(54) **VORRICHTUNG ZUR INSPEKTION DER OBERFLÄCHE EINES TRANSPARENTEN GEGENSTANDS SOWIE ENTSPRECHENDES VERFAHREN**
DEVICE FOR INSPECTING THE SURFACE OF A TRANSPARENT OBJECT, AND CORRESPONDING METHOD
DISPOSITIF POUR INSPECTER LA SURFACE D'UN OBJET TRANSPARENT ET PROCÉDÉ CORRESPONDANT

(30) Priorität: 14.12.2020 DE 102020133397
(43) Veröffentlichungstag der Anmeldung: 18.10.2023
(73) Patentinhaber: ISRA VISION GMBH, 64293 Darmstadt (DE)
(72) Erfinder: DROSTE, Josef, 49219 Glandorf (DE); RECKOW, Jürgen, 46414 Rhede (DE)
(74) Vertreter: WSL Patentanwälte Partnerschaft mbB
(86) Internationale Anmeldenummer: PCT/EP2021/085528
(87) Internationale Veröffentlichungsnummer: WO 2022/128936

(56) Entgegenhaltungen:
- DE-A1- 102005 007 715
- JP-A- S63 186 132
- US-A- 6 144 446
- US-A1- 2010 214 564
- US-A1- 2011 187 849

## Beschreibung

Die Erfindung bezieht sich auf die Inspektion der Oberfläche eines folienartigen transparenten Gegenstands, beispielsweise dünnes Flachglas oder transparente Folie, sowie ein entsprechendes Verfahren hierfür.

Dünnes Flachglas oder transparente Folie, die/das beispielsweise 0,01 Millimeter bis wenige Millimeter dick ist, wird vor allem in der Optik, Elektronik- und Displayindustrie, u.A. zur Herstellung von Flüssigkristallanzeigen oder Flüssigkristallbildschirmen verwendet. Dünnes Flachglas wird auch als Dünnglas, Displayglas oder Microsheet bezeichnet. Dünnes Flachglas oder Folie weist jeweils eine Oberfläche auf einer Oberseite und eine Oberfläche auf einer der Oberseite gegenüber liegenden Unterseite auf, die eine, jeweils bezogen auf die Dicke des Gegenstands, vergleichsweise große Ausdehnung haben. Bei der Produktion von derartigen Gegenständen ist die Reinheit dieser Oberflächen ein wichtiges Kriterium. Daher wird beispielsweise während der Flachglas-Produktion überwacht, ob sich auf der Glasoberfläche Partikel befinden und wie sich ihre Verteilung auf der Oberfläche darstellt. Hierbei können derartige Partikel sehr klein sein, d.h. ihr Durchmesser kann nur wenige Mikrometer betragen.

Die optische Inspektion von Gläsern und Folien ist bereits seit längerem bekannt. Typischerweise wird ein kamerabasiertes Verfahren mit einer starken Dunkelfeldbeleuchtung eingesetzt, um Verschmutzungen zu detektieren. Dieses Verfahren erfasst Partikel, die sich auf der Oberseite und der Unterseite des dünnen Flachglases befinden, gleichzeitig. Dieses Verfahren wird AB-Side genannt. Es kann jedoch Partikel auf der Oberseite und der Unterseite nicht unterscheiden.

Für die weitere Prozessierung des transparenten Gegenstands, z.B. eine gezielte Reinigung des Flachglases, wäre es jedoch wünschenswert, die Verschmutzung einer der beiden Seiten, d.h. entweder der Oberseite oder der Unterseite, zuordnen zu können.

Das Dokument US 2011/0187849 A1 zeigt und beschreibt eine Vorrichtung zum Erkennen von Partikeln auf Flachglas. Bei der Vorrichtung wird ein Flachglassubstrat mit einer ersten Laser-Beleuchtungsvorrichtung und einer zweiten Laser-Beleuchtungsvorrichtung beleuchtet. Hierbei wird die erste Beleuchtungsvorrichtung auf die obere Oberfläche A des Substrats und die zweite Beleuchtungsvorrichtung auf die gegenüber liegende Oberfläche B des Substrats gelenkt. Ferner ist eine Aufnahmevorrichtung für das Streulicht von Partikeln auf der Oberfläche A des Substrats und eine Aufnahmevorrichtung für das Streulicht von Partikeln auf der Oberfläche B des Substrats vorgesehen. Die von den Aufnahmevorrichtungen erzeugten Bildsignale werden mit einem Erfassungssignalprozessor verarbeitet. Die Aufnahmevorrichtungen befinden sich oberhalb des Substrats, und zwar in Richtung der Normalen auf dem Substrat. Dies hat den Nachteil, dass Höhenschwankungen des Substrats dazu führen, dass der beleuchtete linienförmige Bereich aus dem Erfassungsbereich der Kamera wandert.

Die Aufgabe der vorliegenden Erfindung besteht somit darin, eine Vorrichtung zu schaffen, mit der die Größe und Verteilung von Partikeln auf lediglich einer Seite des transparenten Gegenstands separat, d.h. entweder auf der Oberseite oder auf der Unterseite, bestimmt werden kann. Analog besteht die Aufgabe darin, ein entsprechendes Verfahren anzugeben.

Die obige Aufgabe wird durch die Vorrichtung mit den Merkmalen des Anspruchs 1 und das Verfahren mit den Merkmalen des Anspruchs 8 gelöst.

Die erfindungsgemäße Vorrichtung zur Inspektion eines folienartigen transparenten Gegenstands mit einer ersten Oberfläche auf der Oberseite und einer zweiten Oberfläche auf der Unterseite des transparenten Gegenstands weist insbesondere eine Kamera und mindestens eine Lichtquelle auf. Der folienartige transparente Gegenstand kann beispielsweise eine Dicke (Stärke) von 0,1 mm bis einige Millimeter haben. Hierbei werden als Oberseite und Unterseite des transparenten Gegenstands die beiden gegenüber liegenden Seiten bezeichnet, welche die größte Ausdehnung besitzen. Entsprechend wird mit "oben" der Raum oberhalb der Oberseite und mit "unten" der Raum unterhalb der Unterseite bezeichnet. Die Dicke ist die Materialstärke des Gegenstands zwischen Oberseite und Unterseite.

Mit dem Begriff "Transparenz" wird eine optische Eigenschaft des Materials des Gegenstands, nämlich seine Durchlässigkeit für elektromagnetische Strahlung, beschrieben. Die Erfindung ist insbesondere für Gegenstände anwendbar, deren Transparenz für elektromagnetische Strahlung zumindest in einem Teilbereich eines Wellenlängenbereichs zwischen 300 nm und 3 µm, vorzugsweise eines Wellenlängenbereichs zwischen 380 nm und 780 nm (sichtbares Licht), mindestens 50% beträgt. Die Lichtquelle ist derart eingerichtet, dass die von der Lichtquelle ausgesandte elektromagnetische Strahlung einen linienförmigen Bereich der ersten Oberfläche von oben oder der zweiten Oberfläche des Gegenstands von unten beleuchtet. Die Wellenlänge der von der Lichtquelle verwendeten elektromagnetischen Strahlung liegt beispielsweise in einem Wellenlängenbereich zwischen 300 nm und 3 µm, vorzugsweise in einem Wellenlängenbereich zwischen 380 nm und 780 nm (sichtbares Licht). Die Lichtquelle beleuchtet somit eine der Lichtquelle zugewandte Oberfläche des transparenten Gegenstands in dem linienförmigen Bereich, der beispielsweise in eine Richtung entlang der Linie eine Abmessung (Länge) in einem Bereich von 1 cm bis 10 m und in eine Richtung quer zur Linie eine Abmessung (Breite) in einem Bereich von wenigen µm bis wenigen mm aufweisen kann. Der von der Lichtquelle beleuchtete linienförmige Bereich ist etwas größer oder gleich groß in Bezug auf den Erfassungsbereich einer Kamera, die beispielsweise als Zeilenkamera ausgebildet ist und die von dem linienförmigen Bereich zurück reflektierte elektromagnetische Strahlung erfasst. Hierbei erfolgt die Beleuchtung unter einem vorgegebenen Winkel zur jeweiligen beleuchteten Oberfläche, wobei die Kamera derart eingerichtet ist, dass sie die Intensität der zurück reflektierten elektromagnetischen Strahlung, das heißt die Intensität der in Richtung der Lichtquelle reflektierten elektromagnetischen Strahlung, in mindestens einen Abschnitt des linienförmigen Bereichs erfasst. Die Kamera ist somit auf der gleichen Seite des Gegenstands, d.h. auf der der Lichtquelle zugewandten Seite, angeordnet. Weiter ist vorgesehen, dass der vorgegebene Winkel kleiner oder gleich 15° und die elektromagnetische Strahlung überwiegend linear und s-polarisiert (d.h. transversal elektrisch polarisiert) ist. Vorzugsweise liegt der vorgegebene Winkel im Bereich von 3° bis 12°, besonders bevorzugt im Bereich von 5° bis 10°. Hierbei ist die Polarisationsrichtung des elektrischen Feldvektors gemeint, deren Schwingungsrichtung konstant ist (lineare Polarisation). S-polarisiert bedeutet hierbei, dass das elektrische Feld der elektromagnetischen Strahlung senkrecht auf der Einfallsebene steht. Der Ausdruck "überwiegend s-polarisiert" meint, dass der Polarisationsgrad (Anteil der s-polarisierten Strahlung) mindestens 75 %, vorzugsweise mindestens 90 %, besonders bevorzugt mindestens 95 % beträgt. Da die von der nicht verschmutzten Oberfläche reflektierte elektromagnetische Strahlung von der Lichtquelle weg reflektiert wird, erfasst die Kamera nur die von Partikeln auf der Oberfläche in Richtung Kamera bzw. Lichtquelle zurück reflektierte Intensität der elektromagnetischen Strahlung. Insbesondere erfasst die Kamera die von dem beleuchteten linienförmigen Bereich der Oberfläche in Richtung der mindestens einen Lichtquelle zurück reflektierte Intensität der elektromagnetischen Strahlung. Detektiert die Kamera in Teilbereichen des linienförmigen Bereichs eine hohe zurück reflektierte Intensität, wird angenommen, dass sich dort Partikel an der Oberfläche befinden, die diese Oberfläche verschmutzen.

Die erfindungsgemäße Vorrichtung hat den Vorteil, dass durch den extrem flachen Beleuchtungswinkel (vorgegebener Winkel kleiner als oder gleich 15°) nur vergleichsweise wenig Licht in den transparenten Gegenstand eindringt. Der Anteil des Lichtes, der reflektiert wird, ist abhängig vom Beleuchtungswinkel. Bei einem kleinen Beleuchtungswinkel wird das meiste einfallende Licht in eine Richtung weg von der Lichtquelle (und somit der Kamera) reflektiert und ein sehr kleiner Anteil dringt in den transparenten Gegenstand ein. Der gleiche Effekt tritt auf der der beleuchteten Oberfläche gegenüber liegenden Seite des transparenten Gegenstands noch einmal auf. Lediglich ein sehr, sehr kleiner Teil des einfallenden Lichtes erreicht die Verschmutzungs-Partikel, die auf der der beleuchteten Oberfläche gegenüber liegenden Oberfläche angeordnet sind.

Es ist ferner bekannt, dass elektromagnetische Strahlung an der Grenzfläche zweier Medien (d.h. hier an der beleuchteten Oberfläche des transparenten Gegenstands) teilweise reflektiert und teilweise in das zweite Medium (hier das transparente Material) hinein gebrochen wird. Hierbei ist der Anteil der reflektierten und somit auch der gebrochenen Strahlung für s-polarisiertes Licht anders als der von p-polarisiertem Licht. Diese Gesetzmäßigkeit wird hier derart in erfinderischer Weise ausgenutzt, dass zur Beleuchtung überwiegend s-polarisierte elektromagnetische Strahlung verwendet wird. Bei kleinen Beleuchtungswinkeln - wie im vorliegenden Fall - ist wird ein großer Anteil der s-polarisierten elektromagnetischen Strahlung reflektiert, der transmittierte Anteil ist vergleichsweise klein. Bei p-polarisiertem Licht tritt dieser Effekt zwar auch auf, aber nur bei extrem flachen Winkeln, die aus Platzgründen in der Praxis nur mit einem sehr großen Aufwand realisierbar sind. Bei weniger flachen Winkeln nimmt bei p-polarisiertem Licht der reflektierte Anteil sehr schnell ab. Wird nun lediglich mit überwiegend s-polarisiertem Licht eingestrahlt, so ist der p-polarisierte Anteil in der einfallenden elektromagnetischen Strahlung sehr klein und der hiervon in den transparenten Körper hinein gebrochene Anteil an der Gesamtbeleuchtung ist sehr gering. Von der eingestrahlten s-polarisierten Strahlung wird hingegen ein großer Teil reflektiert und es wird nur ein kleiner Teil in den transparenten Körper hinein gebrochen. Somit erreicht lediglich ein verschwindend kleiner Teil des Lichts die Oberfläche des transparenten Gegenstands, welcher der beleuchteten Oberfläche gegenüber liegt.

Aus beiden oben beschriebenen Effekten ergibt sich, dass der Anteil der durch den transparenten Gegenstand hindurchgehenden elektromagnetischen Strahlung sehr gering ist. Die Verschmutzung an der der beleuchteten Oberfläche gegenüber liegenden Seite wird also nur von sehr wenig Licht erreicht. Somit werden im entsprechenden Kamerabild die jeweiligen Partikel auf der kamerazugewandten Oberfläche mit einer deutlich größeren Intensität erfasst als die auf der kameraabgewandten Seite, so dass die Verschmutzungs-Partikel auf der kamerazugewandten Oberfläche von den Partikeln, die auf der gegenüber liegenden Seite des Gegenstands angeordnet sind, unterschieden werden können. Das in Richtung der mindestes einen Lichtquelle zurück reflektierte Licht wird mittels der Kamera erfasst und dient als Basis für die Ermittlung, wo sich diese Oberfläche verschmutzende Partikel befinden und wie groß diese sind.

Erfindungsgemäß schließt der optische Pfad der Kamera in einem gegenstandsseitigen Endabschnitt, der zu dem beleuchteten linienförmigen Bereich der jeweiligen Oberfläche benachbart ist, mit dem optischen Pfad der von der Lichtquelle ausgesandten elektromagnetischen Strahlung einen Winkel ein, der kleiner als 20°, vorzugsweise kleiner als 10°, besonders bevorzugt kleiner als 5° ist. Durch die Anordnung der Lichtquelle und der Kamera unter dem gleichen oder dem genannten sehr kleinen Winkel werden negative Effekte auf die Inspektion, die durch eine Lageänderung der Oberfläche des Gegenstands auf den Fokus der Kamera und die Intensität der Beleuchtung hervorgerufen werden, weitgehend verhindert. Höhenschwankungen in dem Material führen nicht dazu, dass der beleuchtete linienförmige Bereich der beleuchteten Oberfläche aus dem Erfassungsbereich der Kamera wandert. In diesem Ausführungsbeispiel schließt der optische Pfad der Kamera mit dem optischen Pfad der von der Lichtquelle ausgesandten elektromagnetischen Strahlung, d.h. mit der Strahlung des einfallenden Lichts, einen Winkel ein, der kleiner als 5° ist. Vorzugsweise ist der Winkel kleiner als 3°, besonders bevorzugt kleiner als 1°. In einem Ausführungsbeispiel kann der optische Pfad der Kamera derart angeordnet sein, dass dieser in dem Endabschnitt, der zu dem beleuchteten linienförmigen Bereich der jeweiligen Oberfläche benachbart ist, in einer Ebene mit dem optischen Pfad der Lichtquelle verläuft.

Die erfindungsgemäße Vorrichtung und das erfindungsgemäße Verfahren sind insbesondere für Gegenstände aus Glas (beispielsweise Silikatglas) oder Kunststoff anwendbar. Der Gegenstand kann eine bandförmige Gestaltung aufweisen, d.h. mit einer vorgegebenen Geschwindigkeit an der erfindungsgemäßen Vorrichtung vorbeilaufen, oder als Einzelstück inspiziert werden.

In einem Ausführungsbeispiel sind zwei oder mehr Lichtquellen vorgesehen. Die eine oder zwei oder mehr als zwei Lichtquellen sind in einem weiteren Ausführungsbeispiel als Laser mit Linienoptik ausgebildet, wobei die Linienoptik den den Laser verlassenden Lichtstrahl zu einer Linie aufweitet. Der so erzeugte beleuchtete linienförmige Laserstrahl beleuchtet den linienförmigen Bereich der ersten Oberfläche von oben oder den linienförmigen Bereich der zweiten Oberfläche von unten mit hoher Intensität, z.B. mit einer Lichtleistung im Bereich von 1 mW und 10 mW pro Linien-Millimeter. Durch die Linienoptik weitet sich die von der Lichtquelle ausgesandte elektromagnetische Strahlung in Richtung Gegenstand auf, so dass die Lichtquelle und die ausgesandte Strahlung auf der der Lichtquelle zugewandten Seite einen geringen Platzbedarf hat. Als Laser kann beispielsweise ein Laser (z.B. ein Diodenlaser) mit einer Frequenz im sichtbaren Wellenlängenbereich verwendet werden, der weiterhin den Vorteil hat, dass er von sich aus nur polarisiertes Licht aussendet. Er muss dann lediglich so ausgerichtet werden, dass das Licht bezogen auf die Auftreffrichtung auf die Oberfläche s-polarisiert ist.

In einem Ausführungsbeispiel können zwei Lichtquellen vorgesehen sein, die jeweils einen Abschnitt des linienförmigen Bereichs der Oberfläche beleuchten. In diesem Ausführungsbeispiel ist eine einzige Kamera vorgesehen, welche beide Abschnitte des linienförmigen Bereichs beobachtet. Es kann auch mehr als eine Kamera vorgesehen sein.

In einem Ausführungsbeispiel ist ein gegenstandsseitiger Endabschnitt des optischen Pfads der Kamera an einem Ende durch einen Umlenkspiegel und am gegenüber liegenden Ende durch die beleuchtete Oberfläche des Gegenstands begrenzt. Mit anderen Worten wird der gegenstandsseitige Endabschnitt des optischen Pfades der Kamera zwischen der der Kamera zugewandten Oberfläche des Gegenstands und einem Umlenkspiegel ausgebildet, an welchem der optische Pfad der Kamera abgewinkelt verläuft. Der Umlenkspiegel lenkt die Blickrichtung der Kamera beispielsweise um 90° um, andere Winkel in einem Winkelbereich von 20° bis 170° sind ebenfalls denkbar. Hierdurch ist eine platzsparende Anordnung der Kamera möglich, weitere Umlenkspiegel können ebenfalls im optischen Pfad der Kamera angeordnet sein.

Ein besonders einfacher Aufbau der Vorrichtung kann dadurch erreicht werden, dass die mindestens eine Lichtquelle neben dem oben erwähnten Umlenkspiegel, der im optischen Pfad der Kamera angeordnet ist, platziert ist. Hierbei bedeutet "neben", dass die mindestens eine Lichtquelle mit einem kleinen Abstand in die Richtung quer zum optischen Pfad der Kamera, in der Ebene, die durch den linienförmigen Bereich der beleuchteten Oberfläche und den optischen Pfad der Kamera aufgespannt wird, angeordnet wird. Hierdurch kann das Licht der mindestens einen Lichtquelle den Umlenkspiegel seitlich passieren und ab dem Umlenkspiegel verlaufen der optische Pfad der Kamera und der Lichtquelle in einer gemeinsamen Ebene oder unter dem oben angegebenen kleinen Winkel (kleiner als 5°). Beleuchtungsrichtung der Lichtquelle und Blickrichtung der Kamera sind somit gleich. In einem weiteren Ausführungsbeispiel ist jeweils eine Lichtquelle auf jeder Seite neben dem Umlenkspiegel angeordnet.

Alternativ oder zusätzlich kann der Umlenkspiegel teildurchlässig ausgeführt sein und die mindestens eine Lichtquelle, von dem transparenten Gegenstand aus gesehen, hinter dem Umlenkspiegel angeordnet sein. Die von der Lichtquelle ausgesandte elektromagnetische Strahlung verläuft dann durch den Umlenkspiegel hindurch und anschließend in einer Ebene mit dem optischen Pfad der Kamera, beispielsweise sind die optischen Pfade der Kamera und der Lichtquelle zwischen Umlenkspiegel und Oberfläche des transparenten Gegenstands identisch. Auch in diesem Fall sind somit Beleuchtungsrichtung und Blickrichtung der Kamera gleich.

In einem Ausführungsbeispiel ist die Kamera als Zeilenkamera ausgeführt, welche die Intensität der reflektierten elektromagnetischen Strahlung pixelweise und entlang dem beleuchteten linienförmigen Bereich erfasst. Die Zeilenkamera kann CCD-, NMOS-, InGaAs- und/oder CMOS-Sensoren aufweisen. Die Zeilenkamera ist für die erfindungsgemäße Vorrichtung im Gegensatz zum zweidimensionalen Sensor vorteilhaft, der über eine Vielzahl von Zeilen verfügt. Obwohl Zeilensensoren in etwa die gleichen Pixelgrößen aufweisen wie Flächensensoren, kann die Zeilenlänge viel größer sein. Anstelle der maximalen 1.000 bis 4.000 Pixel Breite bei Flächensensoren kann eine Zeilenkamera 17.000 Pixel oder mehr aufweisen. Folglich liefert eine Zeilenkamera bei vorgegebenem Objektfeld eine bessere räumliche Auflösung. Darüber hinaus lässt sich eine Zeile wesentlich schneller als eine Fläche auslesen. Insbesondere ist vorteilhaft, wenn, um eine meist wesentlich höheren Taktrate gegenüber einer Flächenkamera zu realisieren, eine höhere Strahlungsintensität der Lichtquelle vorgesehen ist. Ein weiterer großer Vorteil ist, dass in einer Längsrichtung (nämlich quer zur Zeile/Breite des Gegenstands) in einem zusammengesetzten Bild in jeder Zeile exakt die gleiche Beleuchtungsgeometrie verwendet wird.

Das erfindungsgemäße Verfahren zur Inspektion eines folienartigen transparenten Gegenstands mit einer ersten Oberfläche auf der Oberseite und einer zweiten Oberfläche auf der Unterseite des transparenten Gegenstands wird insbesondere mit einer Vorrichtung durchgeführt, die eine Kamera und mindestens eine Lichtquelle aufweist. Mittels der von der mindestens einen Lichtquelle ausgesendeten elektromagnetischen Strahlung wird ein linienförmiger Bereich der ersten Oberfläche von oben oder der zweiten Oberfläche des Gegenstands von unten beleuchtet, wobei die Beleuchtung unter einem vorgegebenen Winkel zur jeweiligen beleuchteten Oberfläche erfolgt. Weiter wird mittels der Kamera die Intensität der zurück in Richtung der mindestens einen Lichtquelle reflektierten elektromagnetischen Strahlung in mindestens einen Abschnitt des linienförmigen Bereichs erfasst, wobei der vorgegebene Winkel kleiner als oder gleich 15° ist und die von der Lichtquelle ausgesandte elektromagnetische Strahlung überwiegend linear polarisiert und s-polarisiert ist, wobei basierend auf der von der Kamera erfassten Intensität der reflektierten elektromagnetischen Strahlung (d.h. aus den erfassten Intensitätsdaten) der Verschmutzungsgrad der beleuchteten Oberfläche ermittelt wird. Dieses Vorgehen beruht auf den oben erläuterten Erkenntnissen der Erfinder zu dem vorteilhaften Reflexionsverhalten elektromagnetischer Strahlung bei einem kleinen Einfallswinkel, wobei die elektromagnetische Strahlung überwiegend linear polarisiert und s-polarisiert ist.

Mit den oben bereits geschilderten Vorteilen wird die Kamera erfindungsgemäß derart ausgerichtet, dass der optische Pfad der Kamera in einem gegenstandsseitigen Endabschnitt, der zu dem beleuchteten linienförmigen Bereich der jeweiligen Oberfläche benachbart ist, mit dem optischen Pfad der von der Lichtquelle ausgesandten elektromagnetischen Strahlung einen Winkel einschließt, der kleiner als 20° ist. Die oben angegebenen Ausführungsbeispiele zur Anordnung der optischen Pfade der Lichtquelle und der Kamera gelten für das erfindungsgemäße Verfahren in gleicher Weise.

In einem Ausführungsbeispiel wird die Intensität der von dem beleuchteten linienförmigen Bereich der Oberfläche reflektierten elektromagnetischen Strahlung beispielsweise mittels einer Zeilenkamera pixelweise erfasst.

In einem weiteren Ausführungsbeispiel wird mittels einer Datenverarbeitungseinrichtung, welche mit der Kamera verbunden ist und an welche die ermittelten Intensitätsdaten übertragen werden, aus den oben beschriebenen Intensitätsdaten (d.h. die von der Kamera aus dem linienförmigen Bereich ermittelten Daten der zurück reflektierten Intensität der elektromagnetischen Strahlung) die Lage und/oder die Größe von die Verschmutzung hervorrufenden Partikeln ermittelt, welche auf der beleuchteten Oberfläche des transparenten Gegenstands angeordnet sind. Beispielsweise ermittelt die Kamera für jeden Pixel eine Lichtintensität, die zwischen dem Wert 0 und einem maximalen Intensitätswert (beispielsweise dem Wert 255) liegt. Zudem kann jedem Pixel der Kamera ein Ort auf der Oberfläche der beleuchteten Seite des transparenten Gegenstands, d.h. auf der ersten Oberfläche oder der zweiten Oberfläche, zugeordnet werden. Dies kann beispielsweise durch die Definition zweidimensionaler Koordinaten und deren Zuordnung zu entsprechenden Orten auf der Oberfläche des Gegenstands verwirklicht werden. Durch entsprechende Kalibrierung ist der Datenverarbeitungseinrichtung bekannt, welcher/welche Ort(e) mit welchen Koordinaten gerade durch die Lichtquelle beleuchtet wird/werden und somit von welchem/welchem Ort(en) gerade von der Kamera entsprechend die zurück reflektierte Intensität der elektromagnetischen Strahlung erfasst wird. Dies ergibt sich insbesondere aus der Anordnung der Lichtquelle(n) und/oder der Kamera, der (Anfangs-)Position des Bandes des transparenten Gegenstands und dessen Vorschubgeschwindigkeit (bei der Inspektion eines bandförmigen transparenten Gegenstands). Da die zurück reflektierte elektromagnetischen Strahlung, die von der Kamera detektiert wird, in dem beleuchteten Bereich liegt, kann somit jedem Pixel ein Ort bzw. eine Koordinate auf der Oberfläche des Gegenstands zugeordnet werden. Wird eine Intensität festgestellt, die über einem ersten, vorgegebenen ersten Intensitätsschwellwert liegt, so wird geschlussfolgert, dass ein die Oberfläche verschmutzender Partikel an dem entsprechenden, zugeordneten Ort (ausgedrückt durch die zweidimensionale Koordinaten) auf der der Lichtquelle und der Kamera zugeordneten Oberfläche vorhanden ist. Für genauere Aussagen zur Größe der Verschmutzungs-Partikel kann die Intensität des zurückreflektierten Lichts ausgewertet werden. Es können beispielsweise Unter-Intensitätsbereiche vorab definiert werden, in welche der Intensitätsbereich zwischen dem ersten Intensitätsschwellwert und dem maximalen Intensitätswert unterteilt wird. Beispielsweise können vier Unter-Intensitätsbereiche definiert werden. Durch die Zuordnung der gemessenen Intensität an jedem Pixel kann hierdurch die Größe des jeweiligen Partikels bestimmt werden, wobei davon ausgegangen wird, dass eine höhere gemessene Intensität von einem größeren Verschmutzungs-Partikel erzeugt wird. Folglich kann die Datenverarbeitungseinrichtung (z.B. ein Mikroprozessor) die Lage eines Verschmutzungspartikels auf einer der beiden Oberflächen und/oder dessen Größe bestimmen. Hierbei kann sich ein Partikel oder ein Konglomerat aus mehreren Partikeln auch über mehrere Pixel erstrecken.

Bei der Inspektion der Oberfläche eines folienartigen transparenten Gegenstands, z.B. ein dünnes Flachglas, über seine gesamte Ausdehnung in Längsrichtung (d.h. quer zur Breite des Gegenstands) wird beispielsweise so verfahren, dass der Gegenstand in Bezug auf die Vorrichtung bewegt wird. In eine Richtung quer zur Bewegungsrichtung des Gegenstands wird der linienförmige, beleuchtete Bereich angeordnet, so dass nach Möglichkeit die gesamte Breite des Gegenstands erfasst wird. Gegebenenfalls werden mehrere erfindungsgemäße Vorrichtungen nebeneinander angeordnet, um die gesamte Breite des transparenten Gegenstands zu erfassen. Durch die Bewegung des Gegenstands wird die gesamte Oberfläche auf einer Seite des Gegenstands inspiziert. Alternativ kann auch die Vorrichtung zur Inspektion entlang des Gegenstands bewegt werden.

Mit einer derartigen Inspektion können flächige Objekte, d.h. Objekte mit einer kontinuierlich ausgebildeten Oberfläche sehr gut hinsichtlich der Verschmutzung ihrer jeweiligen Oberseite oder Unterseite separat untersucht werden.

Nachfolgend werden weitere Vorteile, Merkmale und Anwendungsmöglichkeiten der Erfindung anhand eines bevorzugten Ausführungsbeispiels und den Figuren beschrieben. Alle beschriebenen und/oder bildlich dargestellten Merkmale bilden dabei den Gegenstand der vorliegenden Erfindung, auch unabhängig von ihrer Zusammenfassung in den Ansprüchen und deren Rückbezügen.

Es zeigen schematisch:
- Fig. 1: ein Ausschnitt eines ersten Ausführungsbeispiels einer erfindungsgemäßen Vorrichtung bei der Inspektion eines folienartigen transparenten Gegenstands in einer perspektivischen Ansicht von der Seite,
- Fig. 2: das Ausführungsbeispiel gemäß Fig. 1 in einer perspektivischen Ansicht von vorn,
- Fig. 3: eine weitere perspektivische Ansicht von der Seite des Ausführungsbeispiels gemäß Fig. 1 und
- Fig. 4: den Verlauf des optischen Pfades von Kamera und Lichtquelle und der transparente Gegenstand für das Ausführungsbeispiel gemäß Fig. 1 in einer Ansicht von der Seite.

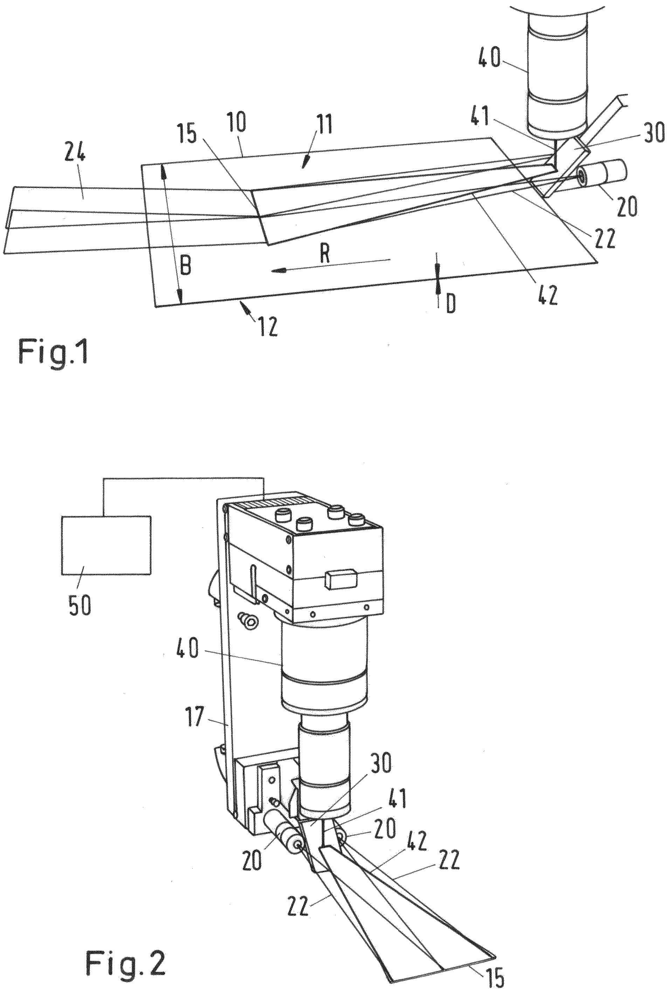

**In** den Figuren 1 bis 4 wird ein erstes Ausführungsbeispiel einer erfindungsgemäßen Vorrichtung zur Inspektion eines transparenten Gegenstands dargestellt. Der Gegenstand ist beispielsweise transparentes Flachglas 10, das in Form eines endlosen Bandes einer Breite B von beispielsweise 1 m in Richtung R an der Vorrichtung mit einer gleichbleibenden Geschwindigkeit vorbeiläuft. Das Flachglas 10 weist eine erste Oberfläche 11 auf der Oberseite und eine zweite Oberfläche 12 auf der Unterseite auf. Die Dicke (Stärke) D des Flachglases 10 kann beispielsweise 0,1 mm bis einige Millimeter betragen.

Zur Inspektion der ersten Oberfläche 11 des Flachglases in Bezug auf partikelförmige Verschmutzung weist die Vorrichtung zwei nebeneinander angeordnete Laser 20 auf (z.B. Diodenlaser, Wellenlänge des Lasers beispielsweise im Wellenlängenbereich des sichtbaren Lichts), die eine Linienoptik besitzen und einen linienförmigen Bereich 15 mit einer Länge von 50 cm auf der ersten Oberfläche 11 beleuchten. Die Breite des linienförmigen Bereichs (quer zur Länge) liegt in dem oben angegebenen Bereich. Beide Laser senden linear polarisiertes Licht aus, das s-polarisiert ist. Die Laser 20 sind an einer Halteplatte 17 montiert, die an einem das Flachglas-Band überragendem Gestell befestigt ist. Durch die Linienoptik wird das Licht, das den Laser 20 verlässt, jeweils zu einem breiten, linienartigen Lichtstrahl 22 aufgefächert, so dass beim Auftreffen des Lichtstrahls auf die erste Oberfläche 11 des Flachglases 10 lediglich der linienförmige Bereich 15 beleuchtet wird. Hierbei sind die zwei Laser 20 so nebeneinander angeordnet, dass jeder Laser 20 jeweils einen Abschnitt der halben Länge des linienförmigen Bereichs 15 beleuchtet.

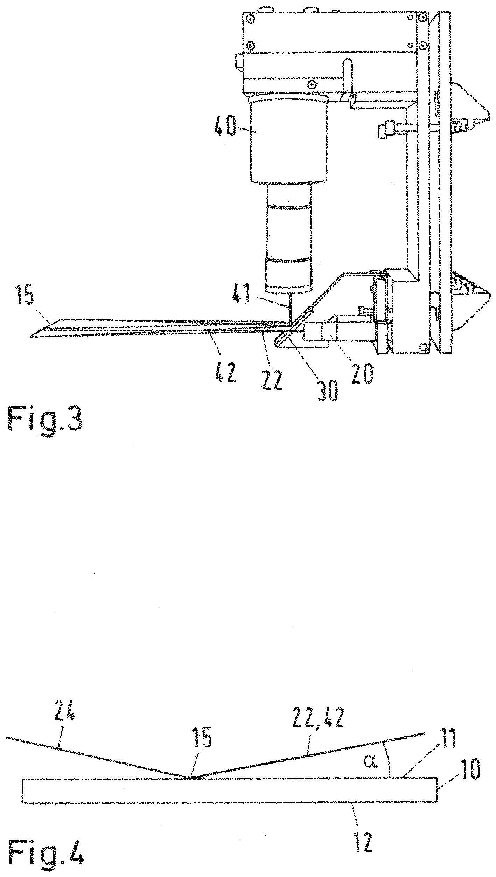

In Fig. 4 ist dargestellt, dass der Lichtstrahl 22 jeder Leuchte 20 einen Winkel α mit der ersten Oberfläche 11 des Flachglases einschließt, der beispielsweise kleiner als 15° ist, vorzugsweise zwischen 3° und 12° liegt, besonders bevorzugt zwischen 5° und 10° liegt. Aufgrund der geringen Größe des Winkels α und der s-Polarisation des einfallenden Lichts 22 wird ein Anteil von mindestens 85% der einfallenden elektromagnetischen Strahlung an der Oberfläche 11 reflektiert, wenn keine Verschmutzungs-Partikel auf der ersten Oberfläche 11 vorhanden sind. Das von der Lichtquelle 20 weg reflektierte Licht 24 schließt ebenfalls den Winkel α mit der Oberfläche 11 des Flachglases ein.

Für die Inspektion der gesamten Oberfläche 11 des Flachglases 10 können auch lediglich eine erfindungsgemäße Vorrichtung vorgesehen sein oder mehr als zwei erfindungsgemäße Vorrichtungen nebeneinander angeordnet werden, so dass das Flachglas über seine gesamte Breite erfasst wird.

Die beiden Laser 20 sind ferner derart angeordnet, dass das Licht jeweils seitlich einen Umlenkspiegel 30 passiert. Dieser Umlenkspiegel 30 wirkt zusammen mit einer Zeilenkamera 40, die oberhalb der ersten Oberfläche 11 des Flachglases an der Halteplatte 17 befestigt ist. Der Sichtstrahl 41 der Kamera wird durch den Umlenkspiegel 30 derart reflektiert, z.B. in einem Winkel von 90°, dass der optische Pfad dann parallel und in einer Ebene mit den Lichtstrahlen 22 der zwei Leuchten 20 verläuft und die Oberfläche 11 des Flachglases ebenfalls in dem beleuchteten linienförmigen Bereich trifft. Mit anderen Worten beobachtet die Kamera 40 den linienförmigen Bereich 15 der ersten Oberfläche 11, wobei ein gegenstandsseitiger Endabschnitt 42 des optischen Pfads der Kamera 40 in einer Ebene mit den beiden Lichtstrahlen 22 der Leuchten 20 verläuft. Er schließt somit, wie in Fig. 4 dargestellt wird, mit der Oberfläche 11 ebenfalls den Winkel α ein. Alternativ kann sich der Winkel des gegenstandsseitigen Endabschnitts 42 der Kamera 40, den dieser mit der Oberfläche 11 einschließt, um weniger als 5° von dem Winkel α unterscheiden. Durch die Anordnung der Lichtquellen 20 und der Kamera 40 unter dem gleichen oder annähernd dem gleichen Winkel werden negative Effekte durch Lageänderungen der Oberfläche 11 des Flachglases 10 auf den Fokus der Kamera und die Beleuchtungsintensität der Laser 20 weitgehend verhindert.

Wenn in dem beleuchteten linienförmigen Bereich 11 der ersten Oberfläche 11 ein oder mehrere Verschmutzungs-Partikel vorhanden ist/sind, dann reflektiert/reflektieren dieser/diese das Laserlicht in die Kamera 20 zurück. Die in die Kamera von dem/den Verschmutzungs-Partikel(n) zurück reflektierte elektromagnetische Strahlung und wird von dieser als heller Punkt wahrgenommen und von mindestens einem Pixel der Kamerazeile als Helligkeitsinformation (Intensität des reflektierten Lichts) erfasst.

Die mit der Kamera 40 verbundene Datenverarbeitungseinrichtung 50 (siehe Fig. 2) erhält die von der Kamera erfassten Intensitätsdaten, wobei der Zeilenkamera die Intensitätsdaten zusammen mit der Zuordnung zu jedem Pixel übermittelt werden. Ferner kennt die Datenverarbeitungseinrichtung 50 die Lage des beleuchteten linienförmigen Bereichs 15 auf der ersten Oberfläche 11 des Flachglases 10. Die Datenverarbeitungseinrichtung berechnet hieraus die Lage der Schmutzpartikel, die zu einem erfassten hellen Bereich der Zeilenkamera gehören. Die erfasste Intensität kann beispielsweise in einem Bereich zwischen 0 und 255 pro Kamerapixel liegen. Beispielsweise schlussfolgert die Datenverarbeitungseinrichtung 50 bei einer Intensität größer oder gleich einem ersten Intensitätsschwellwert von 21 an einem Pixel, dass an der zugehörigen Stelle des beleuchteten linienförmigen Bereichs ein Partikel liegt. Unterschiedliche Intensitäten können unterschiedlich großen Partikeldurchmessern zugeordnet werden, die beispielhaft in der nachfolgenden Tabelle wiedergegeben sind.

| Intensität | Partikeldurchmesser |
|---|---|
| 21 - 80 | 2 µm |
| 81 - 140 | 4 µm |
| 141 - 200 | 6 µm |
| 201 - 255 | 8 µm |

In einer weiteren Möglichkeit zur Auswertung der erhaltenen Intensitätswerte der zurückreflektierten elektromagnetischen Strahlung könnte alternativ oder zusätzlich so vorgegangen werden, dass, wenn benachbarte Pixel vorgegebene Intensitätswerte (z.B. in den obigen Bereichen) aufweisen, vermutet wird, dass der Partikel sich über mehr als zwei Pixel erstreckt. Die ermittelten Partikeldurchmesser dieser benachbarten Pixel können dann beispielsweise addiert werden. Auch in Richtung R können ermittelte Partikeldurchmesser addiert werden, wenn Intensitätswerte oberhalb des ersten Intensitätsschwellwerts an benachbarten Pixeln ermittelt werden. Andere Auswertungen der ermittelten Intensitätswerte der zurückreflektierten elektromagnetischen Strahlung sind ebenfalls denkbar. Hierbei ist die Scangeschwindigkeit der Kamera 40 an die Geschwindigkeit des sich in Richtung R fortbewegenden Flachglasbandes angepasst, so dass sich nach einem Erfassungsdurchgang für eine Zeile der Kamera das Flachglasband genau um die Breite des belichteten und mit der Zeilenkamera erfassten linienförmigen Bereichs in Richtung R weiterbewegt hat, so dass mit der nächsten Erfassung der nächste linienförmige Bereich genau neben dem vorherigen linienförmigen Bereich erfasst wird.

In einem alternativen, nicht dargestellten Ausführungsbeispiel sind die Laser 20 nicht neben dem Umlenkspiegel 30 sondern hinter dem Umlenkspiegel angeordnet. Ihr Licht passiert den Umlenkspiegel 30 und gelangt durch den Umlenkspiegel 30 hindurch zu der ersten Oberfläche 11. Hierfür ist der Umlenkspiegel als teildurchlässiger Spiegel ausgebildet.

Wenn die Verschmutzung auf der zweiten Oberfläche 12 ermittelt werden soll, so werden die Kamera, der Umlenkspiegel und die Lichtquelle spiegelverkehrt unterhalb des Flachglases angeordnet und die Beleuchtung eines linienförmigen Bereichs unter einem Winkel α zur zweiten Oberfläche 12 realisiert. Der optische Pfad der Kamera verläuft am gegenstandsseitigen Ende ebenfalls unter dem Winkel α zur zweiten Oberfläche 12.

Durch die erfindungsgemäße Vorrichtung bzw. die erfindungsgemäße Vorrichtung kann die Verschmutzung gezielt auf der Oberfläche einer einzigen Seite des Flachglases oder anderer folienartiger, transparenter Gegenstände ermittelt werden.

## Patentansprüche

1. Vorrichtung zur Inspektion eines transparenten Gegenstands (10) in Form einer Folie oder von dünnem Flachglas mit einer ersten Oberfläche (11) auf der Oberseite und einer zweiten Oberfläche (12) auf der Unterseite des transparenten Gegenstands,
wobei die Vorrichtung eine Kamera (40) und mindestens eine Lichtquelle (20) aufweist, wobei die Lichtquelle (20) derart eingerichtet ist, dass die von der Lichtquelle ausgesandte elektromagnetische Strahlung einen linienförmigen Bereich (15) der ersten Oberfläche (11) von oben oder der zweiten Oberfläche (12) des Gegenstands von unten beleuchtet, wobei die Beleuchtung unter einem vorgegebenen Winkel (α) zur jeweiligen beleuchteten Oberfläche (11) erfolgt, wobei die Kamera (40) derart eingerichtet ist, dass sie die Intensität der zurück reflektierten elektromagnetischen Strahlung in mindestens einem Abschnitt des linienförmigen Bereichs (15) erfasst, wobei der vorgegebene Winkel (α) kleiner als oder gleich 15° und die von der Lichtquelle (20) ausgesandte elektromagnetische Strahlung linear und s-polarisiert ist, wobei der Anteil der linear und s-polarisierten Strahlung mindestens 75 % beträgt,
**dadurch gekennzeichnet, dass** der optische Pfad (41,42) der Kamera (40) in einem gegenstandsseitigen Endabschnitt, der zu dem beleuchteten linienförmigen Bereich der jeweiligen Oberfläche (11) benachbart ist, mit dem optischen Pfad (22) der von der Lichtquelle (20) ausgesandten elektromagnetischen Strahlung (20) einen Winkel einschließt, der kleiner als 20° ist.

2. Vorrichtung nach einem der vorhergehenden Ansprüche, **dadurch gekennzeichnet, dass** der gegenstandsseitige Endabschnitt (42) des optischen Pfads der Kamera (40) an einem Ende durch einen Umlenkspiegel (30) und am gegenüber liegenden Ende durch die beleuchtete Oberfläche (11) des Gegenstands begrenzt ist.

3. Vorrichtung nach Anspruch 2, **dadurch gekennzeichnet, dass** die mindestens eine Lichtquelle (20) neben dem Umlenkspiegel (30) angeordnet ist.

4. Vorrichtung nach Anspruch 2 oder 3, **dadurch gekennzeichnet, dass** der Umlenkspiegel teildurchlässig ist und die mindestens eine Lichtquelle, von dem transparenten Gegenstand (10) aus gesehen, hinter dem Umlenkspiegel angeordnet ist.

5. Vorrichtung nach einem der vorhergehenden Ansprüche, **dadurch gekennzeichnet, dass** die Lichtquelle (20) als Laser mit Linienoptik ausgebildet ist und elektromagnetische Strahlung mit einer Wellenlänge aussendet, die beispielsweise im Bereich des sichtbaren Lichts liegt.

6. Vorrichtung nach einem der vorhergehenden Ansprüche, **dadurch gekennzeichnet, dass** die Kamera (40) dazu eingerichtet ist, die Intensität der reflektierten elektromagnetischen Strahlung pixelweise zu erfassen.

7. Vorrichtung nach einem der vorhergehenden Ansprüche, **dadurch gekennzeichnet, dass** eine Datenverarbeitungseinrichtung (50) vorgesehen ist, welche mit der Kamera (40) verbunden ist und an welche die ermittelten Intensitätsdaten übertragbar sind, wobei die Datenverarbeitungseinrichtung (50) derart eingerichtet ist, dass sie aus den Intensitätsdaten die Lage und/oder die Größe von Partikeln ermittelt, welche auf der beleuchteten Oberfläche (11) des transparenten Gegenstands (10) angeordnet sind.

8. Verfahren zur Inspektion eines transparenten Gegenstands (10) in Form einer Folie oder von dünnem Flachglas mit einer ersten Oberfläche (11) auf der Oberseite und einer zweiten Oberfläche (12) auf der Unterseite des transparenten Gegenstands (10) mit einer Vorrichtung,
wobei die Vorrichtung eine Kamera (40) und mindestens eine Lichtquelle (20) aufweist, wobei mittels der von der Lichtquelle (20) ausgesendeten elektromagnetischen Strahlung einen linienförmigen Bereich (15) der ersten Oberfläche (11) von oben oder der zweiten Oberfläche (12) des Gegenstands von unten beleuchtet wird, wobei die Beleuchtung unter einem vorgegebenen Winkel (α) zur jeweiligen beleuchteten Oberfläche (11) erfolgt, wobei mittels der Kamera (40) die Intensität der zurück reflektierten elektromagnetischen Strahlung in mindestens einen Abschnitt des linienförmigen Bereichs (15) erfasst wird, wobei der vorgegebene Winkel (α) kleiner als oder gleich 15° ist und die von der Lichtquelle (20) ausgesandte elektromagnetische Strahlung linear und s-polarisiert ist, wobei der Anteil der linear und s-polarisierten Strahlung mindestens 75 % beträgt, wobei basierend auf der von der Kamera (40) erfassten Intensität der Verschmutzungsgrad der beleuchteten Oberfläche (11) ermittelt wird, **dadurch gekennzeichnet, dass** die Kamera (40) derart ausgerichtet wird, dass der optische Pfad (41,42) der Kamera (40) in einem gegenstandsseitigen Endabschnitt, der zu dem beleuchteten linienförmigen Bereich der jeweiligen Oberfläche (11) benachbart ist, mit dem optischen Pfad (22) der von der Lichtquelle (20) ausgesandten elektromagnetischen Strahlung (20) einen Winkel einschließt, der kleiner als 20° ist.

9. Verfahren nach Anspruch 8, **dadurch gekennzeichnet, dass** die Intensität der reflektierten elektromagnetischen Strahlung durch die Kamera pixelweise erfasst wird.

10. Verfahren nach einem der Ansprüche 8 bis 9, **dadurch gekennzeichnet, dass** mittels einer Datenverarbeitungseinrichtung (50), welche mit der Kamera (40) verbunden ist und an welche die ermittelte Intensität übertragen wird, aus der ermittelten Intensität die Lage und/oder die Größe von Partikeln ermittelt werden, welche auf der beleuchteten Oberfläche (11) des transparenten Gegenstands (10) angeordnet sind.

## Claims

1. A device for inspecting a transparent object (10) being a transparent film or thin flat glass having a first surface (11) on the top side and a second surface (12) on the bottom side of the transparent object,
wherein the device has a camera (40) and at least one light source (20), wherein the light source (20) is set up in such a way that the electromagnetic radiation emitted by the light source illuminates a line-shaped area (15) of the first surface (11) from above or of the second surface (12) of the object from below, wherein the illumination takes place at a predetermined angle (α) to the respective illuminated surface (11), wherein the camera (40) is arranged to detect the intensity of the back-reflected electromagnetic radiation in at least a portion of the line-shaped region (15), wherein the predetermined angle (α) is less than or equal to 15° and the electromagnetic radiation emitted by the light source (20) is linear and s-polarised, wherein the proportion of linear and s-polarized radiation is at least 75 %, **characterised in that** the optical path (41, 42) of the camera (40) in an object-side end portion adjacent to the illuminated line-shaped area of the respective surface (11) encloses an angle with the optical path (22) of the electromagnetic radiation (20) emitted by the light source (20) which is smaller than 20°.

2. The device according to one of the preceding claims, **characterized in that** the object-side end portion (42) of the optical path of the camera (40) is defined at one end by a deflection mirror (30) and at the opposite end by the illuminated surface (11) of the object.

3. The device according to claim 2, **characterized in that** the at least one light source (20) is arranged next to the deflection mirror (30).

4. The device according to claim 2 or 3, **characterised in that** the deflection mirror is partially transparent and the at least one light source is arranged behind the deflection mirror as seen from the transparent object (10).

5. The device according to one of the preceding claims, **characterized in that** the light source (20) is designed as a laser with line optics and emits electromagnetic radiation with a wavelength which is, for example, in the range of visible light.

6. Device according to one of the preceding claims, **characterised in that** the camera (40) is set up to detect the intensity of the reflected electromagnetic radiation pixel by pixel.

7. The device according to one of the preceding claims, **characterized in that** a data processing unit (50) is provided which is connected to the camera (40) and to which the determined intensity data can be transmitted, wherein the data processing unit (50) is set up in such a way that it determines from the intensity data the position and/or the size of particles which are arranged on the illuminated surface (11) of the transparent object (10).

8. A method for inspecting a transparent object (10) being a transparent film or thin flat glass having a first surface (11) on the top side and a second surface (12) on the bottom side of the transparent object (10) with a device,
wherein the device comprises a camera (40) and at least one light source (20), wherein by means of the electromagnetic radiation emitted by the light source (20) a line-shaped area (15) of the first surface (11) is illuminated from above or the second surface (12) of the object is illuminated from below, wherein the illumination takes place at a predetermined angle (α) to the respective illuminated surface (11), wherein by means of the camera (40) the intensity of the electromagnetic radiation reflected back is detected in at least one section of the line-shaped area (15), wherein the predetermined angle (α) is less than or equal to 15° and the electromagnetic radiation emitted by the light source (20) is linear and s-polarised, wherein the proportion of linear and s-polarized radiation is at least 75 %,
wherein the degree of contamination of the illuminated surface (11) is determined on the basis of the intensity detected by the camera (40), **characterised in that** the camera (40) is aligned in such a way that the optical path (41, 42) of the camera (40), in an end section on the object side which is adjacent to the illuminated line-shaped area of the respective surface (11), encloses an angle with the optical path (22) of the electromagnetic radiation (20) emitted by the light source (20) which is smaller than 20°.

9. The method according to claim 8, **characterized in that** the intensity of the reflected electromagnetic radiation is detected pixel by pixel by the camera.

10. The method according to one of the claims 8 to 9, **characterized in that** by means of a data processing unit (50) which is connected to the camera (40) and to which the determined intensity is transmitted, the position and/or the size of particles which are arranged on the illuminated surface (11) of the transparent object (10) are determined from the determined intensity.

## Revendications

1. Dispositif permettant d'inspecter un objet transparent (10) sous forme de film ou de verre plat mince comprenant une première surface (11) sur la face supérieure et une deuxième surface (12) sur la face inférieure de l'objet transparent,
dans lequel le dispositif présente une caméra (40) et au moins une source lumineuse (20), dans lequel la source lumineuse (20) est conçue de façon telle que le rayonnement électromagnétique émis par la source lumineuse éclaire une région linéaire (15) de la première surface (11) par le haut, ou de la deuxième surface (12) de l'objet par le bas, dans lequel l'éclairage s'effectue selon un angle (α) prédéfini par rapport à la surface éclairée (11) respective, dans lequel la caméra (40) est conçue de façon à détecter l'intensité du rayonnement électromagnétique réfléchi dans au moins une partie de la région linéaire (15), dans lequel l'angle prédéfini (α) est inférieur ou égal à 15° et le rayonnement électromagnétique émis par la source lumineuse (20) est linéaire et polarisé s, la proportion du rayonnement linéaire et polarisé s étant d'au moins 75 %,
**caractérisé en ce que** la trajectoire optique (41, 42) de la caméra (40) forme un angle inférieur à 20° avec la trajectoire optique (22) du rayonnement électromagnétique (20) émis par la source lumineuse (20) dans une partie d'extrémité située côté objet et adjacente à la région linéaire éclairée de la surface (11) respective.

2. Dispositif selon l'une des revendications précédentes, **caractérisé en ce que** la partie d'extrémité (42) située côté objet de la trajectoire optique de la caméra (40) est délimitée à une extrémité par un déflecteur (30) et à l'extrémité opposée par la surface éclairée (11) de l'objet.

3. Dispositif selon la revendication 2, **caractérisé en ce que** la source lumineuse (20), au moins au nombre de une, est agencée à côté du déflecteur (30).

4. Dispositif selon la revendication 2 ou 3, **caractérisé en ce que** le déflecteur est partiellement transparent et la source lumineuse, au moins au nombre de une, considérée depuis l'objet transparent (10), est agencée derrière le déflecteur.

5. Dispositif selon l'une des revendications précédentes, **caractérisé en ce que** la source lumineuse (20) est réalisée sous forme de laser avec une optique linéaire et émet un rayonnement électromagnétique présentant une longueur d'onde qui se situe, par exemple, dans la plage de la lumière visible.

6. Dispositif selon l'une des revendications précédentes, **caractérisé en ce que** la caméra (40) est conçue pour détecter l'intensité du rayonnement électromagnétique réfléchi pixel par pixel.

7. Dispositif selon l'une quelconque des revendications précédentes, **caractérisé en ce qu'**est prévu un dispositif de traitement de données (50), qui est relié à la caméra (40) et auquel les données d'intensité déterminées peuvent être transmises, dans lequel le dispositif de traitement de données (50) est conçu de manière à déterminer, à partir des données d'intensité, la position et/ou la taille de particules présentes sur la surface éclairée (11) de l'objet transparent (10).

8. Dispositif permettant d'inspecter un objet transparent (10) sous forme de film ou de verre plat mince comprenant une première surface (11) sur la face supérieure et une deuxième surface (12) sur la face inférieure de l'objet transparent,
dans lequel le dispositif présente une caméra (40) et au moins une source lumineuse (20), dans lequel une région linéaire (15) de la première surface (11) est éclairée par le haut, ou de la deuxième surface (12) de l'objet est éclairée par le bas, au moyen du rayonnement électromagnétique émis par la source lumineuse (20), dans lequel l'éclairage intervient selon un angle prédéfini (α) par rapport à la surface éclairée (11) respective, dans lequel l'intensité du rayonnement électromagnétique réfléchi en retour est détectée dans au moins une partie de la région linéaire (15) au moyen de la caméra (40), dans lequel l'angle prédéfini (a) est inférieur ou égal à 15° et le rayonnement électromagnétique émis par la source lumineuse (20) est linéaire et polarisé s, dans lequel la proportion du rayonnement linéaire et polarisé s est d'au moins 75 %, dans lequel le degré de contamination de la surface éclairée (11) est déterminé en se basant sur l'intensité détectée par la caméra (40), **caractérisé en ce que** la caméra (40) est orientée de façon telle que la trajectoire optique (41, 42) de la caméra (40), dans une section d'extrémité située côté objet et adjacente à la région linéaire éclairée de la surface (11) respective, forme un angle inférieur à 20° avec la trajectoire optique (22)) du rayonnement électromagnétique (20) émis par la source lumineuse (20).

9. Procédé selon la revendication 8, **caractérisé en ce que** l'intensité du rayonnement électromagnétique réfléchi est détectée par la caméra pixel par pixel.

10. Procédé selon l'une des revendications 8 à 9, **caractérisé en ce que** la position et/ou la taille de particules présentes sur la surface éclairée (11) de l'objet transparent (10) est/sont déterminée(s) à partir de l'intensité déterminée au moyen d'un dispositif de traitement de données (50) relié à la caméra (40) et auquel l'intensité déterminée est transmise.
